# EUROPEAN PATENT SPECIFICATION

(11) **EP 3 027 782 B1**
(45) Date of publication and mention of the grant of the patent: **29.07.2020**
(21) Application number: 14835448.3
(22) Date of filing: 03.08.2014
(51) Int. Cl.: C21D 1/18, C21D 1/667

(54) **SPRAY QUENCH SYSTEMS FOR HEAT TREATED METAL PRODUCTS**
SPRÜHABKÜHLUNGSSYSTEME FÜR WÄRMEBEHANDELTE METALLPRODUKTE
SYSTÈMES DE TREMPE PAR PULVÉRISATION DESTINÉS À DES PRODUITS MÉTALLIQUES TRAITÉS THERMIQUEMENT

(30) Priority: 04.08.2013 US 201313958581
(43) Date of publication of application: 08.06.2016
(73) Proprietor: Thermatool Corp., East Haven, CT 06512 (US)
(72) Inventor: NALLEN, Michael A., Hampden, MA 01036 (US); SCOTT, Paul F., Farmington, CT 06032 (US)
(74) Representative: Gill, David Alan
(86) International application number: PCT/US2014/049512
(87) International publication number: WO 2015/020915

(56) References cited:
- JP-A- S5 837 124
- JP-A- S59 140 331
- JP-A- 2003 013 135
- US-A- 2 657 698
- US-A- 2 785 924
- US-A- 3 255 053
- US-A- 4 042 227
- US-A- 4 844 752
- US-A1- 2002 195 753
- US-A1- 2007 181 234

## Description

### Field of the Invention

The present invention relates to spray quench systems used in heat treatment processes of metal products.

### Background of the Invention

Quench, or quench and temper, metallurgical processes are widely used to harden, or harden and temper, a manufactured metal product such as steel pipe, to achieve desired metallurgical and mechanical properties different from those of the starting material used to produce the metal product. Quenching is done after heating of the product, for example, by electric induction heating. Open spray quenching systems are one type of quench systems that can be used to accomplish the hardening and tempering of the metal product. When in-line quenching round, square, rectangular or other shaped products, such as pipes, bars or tubing, at production line speed, an important parameter that determines the material properties achieved by these processes is the metal cooling rate, which must generally be as fast as is possible to obtain the desired results. The cooling rate is determined, in part, by the volume of quenchant used during the rapid cooling of a heated metal part and the velocity of quenchant at the metal surface. The traditional apparatus used to provide a high volume flow of water to the surface of a heated part is sometimes known as a quench barrel. The typical quench barrel is a large diameter, monolithic cylinder equipped with a multitude of holes or nozzles through which quench media flows under medium pressure. Upon contact with the heated metal part, the quenchant provides the rapid cooling necessary to obtain a desired hardness. Also well known is the fixed position quench ring or slot quench. This apparatus is a hollow ring through which the part to be quenched passes. The apparatus contains a multitude of equally spaced holes or slots that act as nozzles for the quenching fluid. The slot quench is typically used in single part, small volume applications, such as induction hardening scanners.

There also exists spray quench apparatus, such as U.S. Patent No. 2,657,698 where a spray outlet passage is formed between inner surface (34) of radial flange (15) and inner surfaces (31) and (32) of insert (17) and annular casting (27), respectively, as shown in FIG. 2 of U.S. Patent No. 2,657,698. Flange (15) terminates in a sharp edge 16 that extends in a generally axial direction corresponding to the direction of the workpiece travel. Annular casting (27) also extends in the axial direction corresponding to the direction of workpiece travel and terminates in edge (33).

Quenching systems must be capable of treating a range of product diameters. However, existing quench barrels and quench rings have a fixed inside diameter. When products having different diameters pass through these fixed diameter devices, the shape of the spray impinging on the product, the spray flow rate, and spray pressure change due to the difference in gap between the spray nozzles and the product. For existing quench systems when the spray is reflected from the product for a given nozzle, the reflected spray can interfere with the spray pattern of adjacent nozzles, and diminish or even destroy their effectiveness. The above limitations of existing quench systems can also cause expanding steam to form at the surface of the product to be quenched. This creates a thermal steam barrier that greatly reduces the rate of cooling of the product.

Further the small "pin hole" quench nozzles used to create the water jets in existing barrel quench systems limit the effective spray volumes and pressures that can be achieved.

Additionally since the product typically must move through the quench device both linearly and while rotating, the supporting conveyor rolls are skewed relative to the axis of travel of the product. This causes different diameter product to run on different centerlines through the conventional fixed geometry quench systems.

US 2007/0181234 A1 discloses the use of spray quench rings but without any teaching or suggestion of a combination of such quench rings with quenchant sources as control features.

It is an object of the present invention to overcome the above limitations of existing spray quench systems.

It is another object of the present invention to provide a spray quench system where the quench rings in the spray quench system are coordinated with the type of quenchant supply to the quench rings to change the pressure, quench ring exit velocity, flow rate, and/or pattern of the spray quench from the outlets of the quench rings in the spray quench system.

Other objects of the present invention are illustrated by the aspects of the invention set forth in this specification and the appended claims.

According to one aspect of the present invention there is provided a spray quench system for quenching a workpiece and as defined in Claim 1.

According to another aspect of the present invention there is provided a method of quenching a workpiece with a spray quench system and as defined in Claim 2.

The above and other aspects of the invention are further set forth in this specification and the appended claims.

### Brief Description of the Drawings

The foregoing brief summary, as well as the following detailed description of the invention, is better understood when read in conjunction with the appended drawings. For the purpose of illustrating the invention, there is shown in the drawings exemplary forms of the invention that are presently preferred; however, the invention is not limited to the specific arrangements and instrumentalities disclosed in the following appended drawings.
FIG. 1 is a perspective view of one example of a quench ring used in a spray quench system of the present invention.
FIG. 2 is a perspective view of one example of a plurality of quench rings used in a spray quench system of the present invention.
FIG. 3 is a sectional view of one example of two quench rings of a spray quench system of the present invention.
FIG. 4 is a sectional view of one example of three quench rings of a spray quench system of the present invention.
FIG. 5 illustrates deviation of the central axis of a workpiece passing through a quench ring of a spray quench system of the present invention and position adjustment of the quench ring relative to the deviation of the central axis of the workpiece.
FIG. 6 is a sectional view of one example of two quench rings of a spray quench system of the present invention with one quench ring having an extended spray guard.
FIG. 7 is a perspective view of one example of a plurality of quench rings in a spray quench system of the present invention wherein the plurality of quench rings are attached to a support structure.
FIG. 8(a) is a sectional view of another example of a quench ring that can be used in a spray quench system of the present invention.
FIG. 8(b) is a cross sectional view of the quench ring in FIG. 8(a) through line A-A in FIG. 8(a).
FIG 9(a) is an enlarged cross sectional detail view of one example of an outlet passage of a quench ring that can be used in a spray quench system of the present invention.
FIG. 9(b) is an exploded cross sectional view of an outer ring element, inner ring element and fastener for a quench ring that can be used in a spray quench system of the present invention.
FIG. 9(c) illustrates in cross section the plenum volume and outlet passage shown in FIG. 9(a).
FIG. 10(a) and FIG. 10(b) illustrate one arrangement for using a fastener control apparatus to change the volume of the outlet passage of a quench ring that can be used in a spray quench system of the present invention, with corresponding detail views FIG. 10(c) and FIG. 10(d) illustrating the volume change in cross section.
FIG. 11(a) and FIG. 11(b) illustrate another arrangement for using a fastener control apparatus to change the volume of the outlet passage of a quench ring that can be used in a spray quench system of the present invention.
FIG. 12(a) illustrates one arrangement for supply of a quenchant to quench rings that can be used in a spray quench system of the present invention.
FIG. 12(b) illustrates another arrangement for supply of a quenchant to quench rings that can be used in a spray quench system of the present invention.
FIG. 12(c) illustrates another arrangement for supply of a quenchant to quench rings that can be used in a spray quench system of the present invention.
FIG. 13 a sectional view of one example of multiple quench rings for a spray quench system of the present invention with at least one quench ring oriented with an outlet passage on the reverse side of the other quench rings in the system.
FIG. 14 illustrates in cross section consecutively feeding the opposing ends of two discrete workpieces through a spray quench system of the present invention.

### Detailed Description of the Invention

In all examples of the invention, workpiece 90 (metal product) being heat-treated moves linearly through one or more quench rings along the Z-axis and in the direction of the arrow shown in the figures in a spray quench system of the present invention. In some examples of the invention, the workpiece may also rotate about the Z-axis as it moves through the one or more quench rings. Suitable mechanical means, not shown in the figures, such as support rollers are used to advance the workpiece through the quench rings. Although workpiece 90 is illustrated as a cylindrical pipe or conduit, the invention may be used with workpieces of different shapes such as, but not limited to, a rectangular tube. Also the workpiece may comprise a series of discrete workpieces, such as gears, suitably mounted on a conveyance means for moving the discrete workpieces through the one or more quench rings. Heating apparatus for heating the workpiece prior to quenching is not shown in the figures, but may be, by way of example and not limitation, one or more solenoidal electric induction coils surrounding the workpiece for inductively heating the workpiece when an alternating current flows through the one or more coils. Also in some configurations, heating apparatus may be interspaced between two or more of the quench rings.

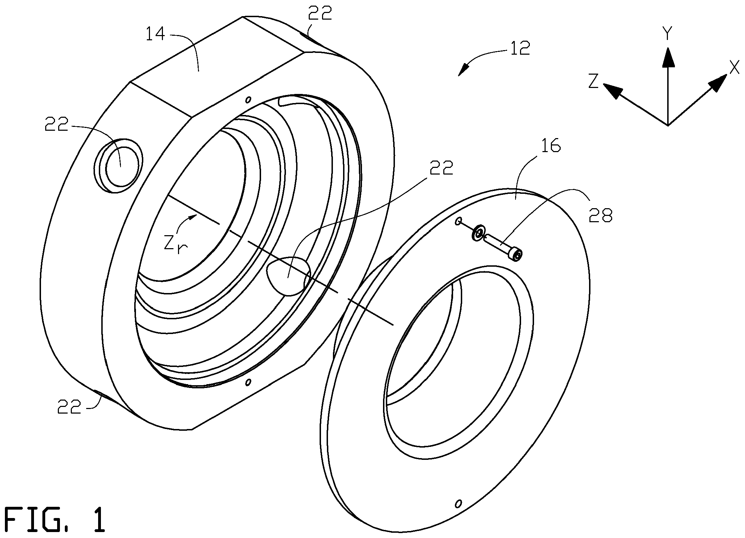

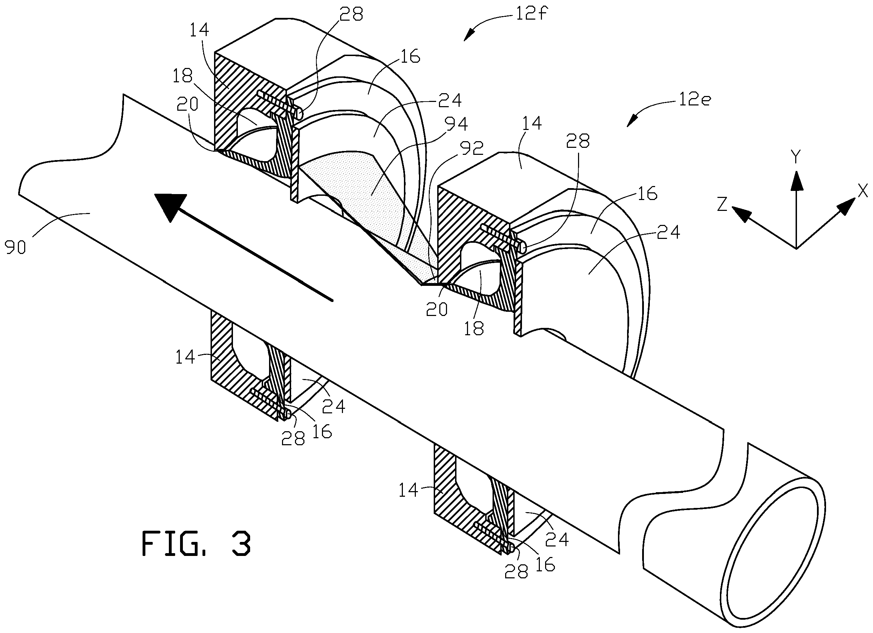

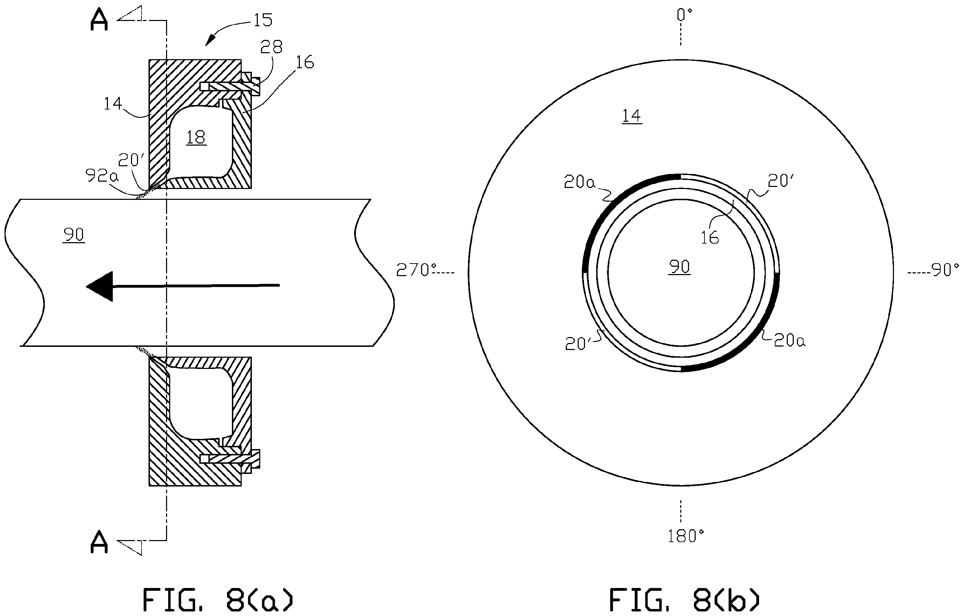

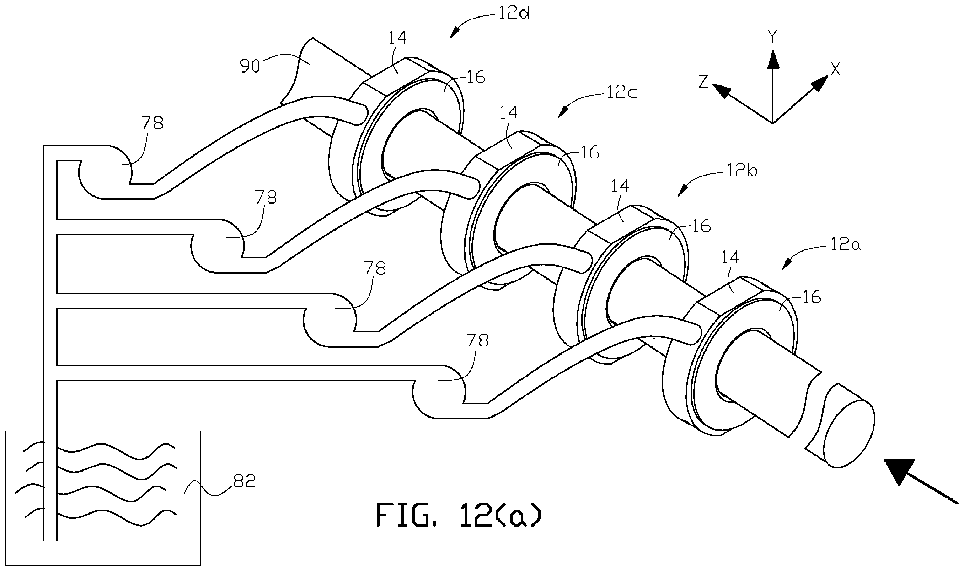

Referring to FIG. 1, there is shown one example of a quench ring 12 used in a spray quench system of the present invention. In this example the quench ring comprises interconnecting first ring element 14 and second ring element 16. In this non-limiting example, second ring element 16 is adjustably inserted into first ring element 14 as best seen in FIG. 3, FIG. 4 or FIG. 5, to form quench ring plenum 18 and outlet passage 20. Moving the first and/or second ring elements along the defined central axis, Zr (FIG. 1), increases or decreases the size of outlet passage 20 of the quench ring to change the pressure, velocity, flow rate and/or pattern of the spray from the outlet passage. In some examples of the invention the outlet passage adjustability can include a closed outlet passage for a zero flow rate. In this non-limiting example of the invention, one or more fasteners 28 are used to control the spacing between the first and second ring elements so that the shape and volume of the outlet opening will correspondingly change as the spacing is changed. Quenchant is supplied to the quench ring plenum by one or more inlet passages 22 from a suitable source. For example as shown in FIG. 12(a) to FIG. 12(c) quenchant supply can be quenchant reservoir 82 that contains recovered quenchant from previous quench processes by a suitable spent quenchant collection system with makeup quenchant as required. Quenchant is supplied to the inlet passages (also referred to as an exterior opening) of the quench rings by a suitable quenchant supply system as further described below. In this non-limiting example of the invention, outlet passage 20 is an annular opening, generally conical in shape, and ejects quenchant 360 degrees around workpiece 90 in a generally conical volume as illustrated by typical flow volume 92 (partially shown as a shaded section) in FIG. 3, FIG. 4 or FIG. 5. While the present example uses a 360 conical flow pattern, other examples of the invention may use different flow patterns as determined by the particular configurations of first and second ring elements. For example one alternative may be annularly segmented conical flow sections around the workpiece where segmented sections are separated by a barrier to produce quenchant flow in selected one or more regions around the workpiece. For example, as shown for quench ring 15 in FIG. 8(a) and FIG. 8(b), rather than 360 degrees quenchant flow as described above, quenchant flow 92a may be restricted to angular outlet passage regions 20' defined as 0 to 90 degrees and 180 to 270 degrees around the workpiece 90 by separation barriers 20a as shown in cross section in FIG. 8(b). In some examples of the invention the shape and volume of the outlet of the quench ring may be fixed.

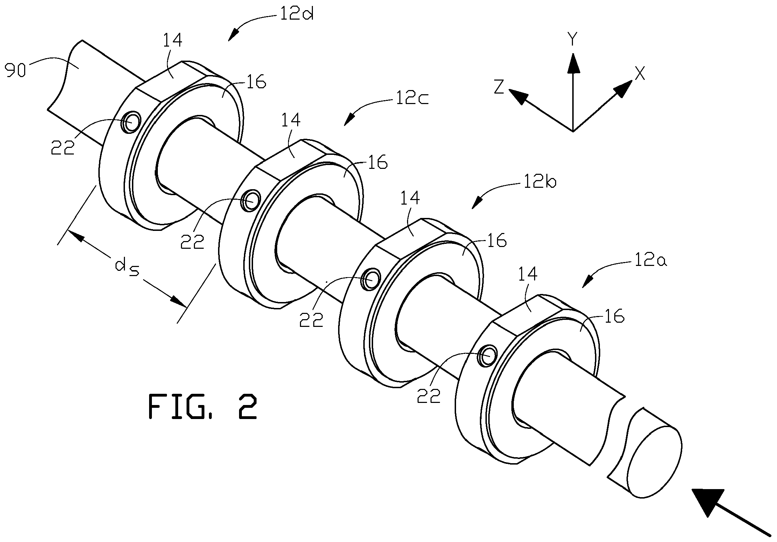

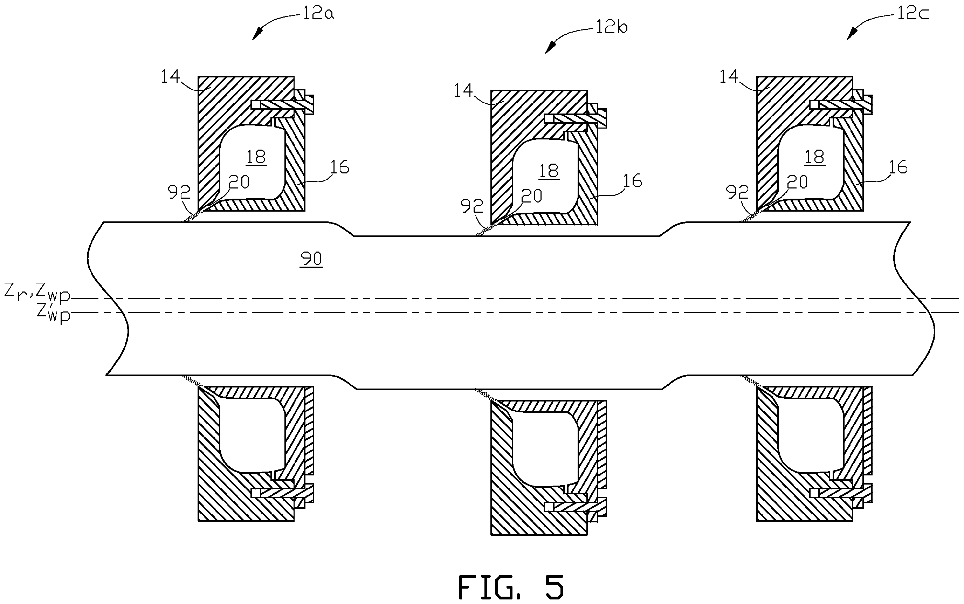

FIG. 2 illustrates another example of the spray quench system of the present invention. In this example, a plurality of quench rings 12a, 12b, 12c and 12d, surround workpiece 90 as it moves through the quench rings. Each quench ring is similar in construction to the quench ring shown in FIG. 1. The distance, dₛ, between adjacent quench rings, which can be referred to as the in-line distance, can be independently adjusted by suitable mounting structure to satisfy the quench conditions of a particular application. Further the location of the central axis, Zᵣ, of each quench ring (FIG. 1) may be independently adjusted by suitable mounting structure to satisfy the quench conditions of a particular application. As noted above, in some applications the workpiece rotates about the Z-axis while moving through the one or more quench rings. In this arrangement torque forces may cause the position of the central axis of the workpiece to deviate as it passes through the quench rings. Moving a quench ring so that its central axis tracks this deviation of the position of a workpiece moving through it may be beneficial. For example FIG. 5 illustrates deviation of the central axis of workpiece 90 from being coincidence (Z_{wp}) with the central axis, Zᵣ, of the quench rings as it passes through the region of quench ring 12b where torque forces cause the central axis of the workpiece to deviate to Z'_{wp}. In the present invention quench ring 12b can reposition downwards so that its central axis moves towards Z'_{wp} to track the deviation of the central axis of the workpiece.

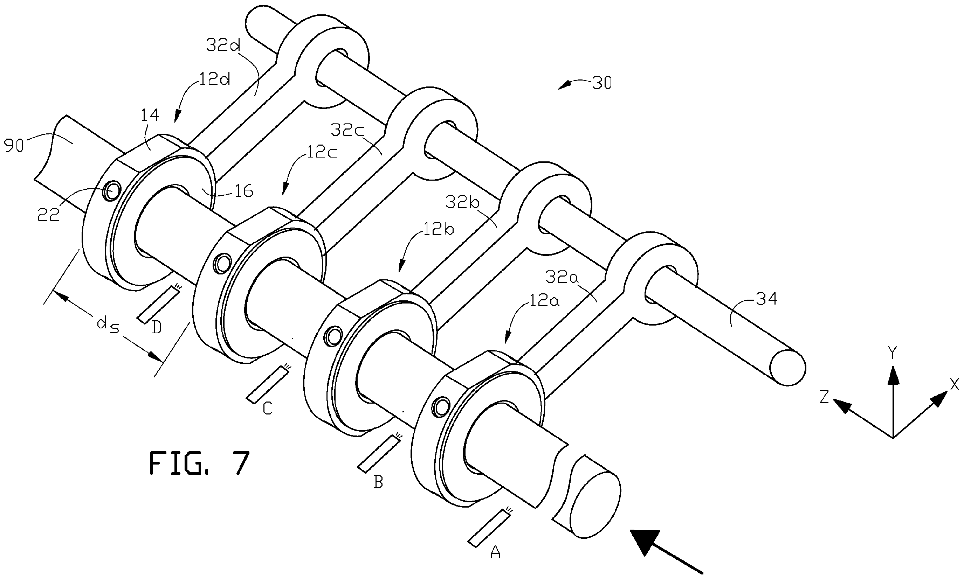

FIG. 7 diagrammatically illustrates one non-limiting example of a suitable mounting support structure 30. Support structure 30 comprises support arms 32a-32d and quench ring position control element 34. Support arms 32a-32d connect quench rings 12a-12d, respectively, to quench ring position control element 34. The position of each support arm can be adjusted along the Z-axis by control element 34 to change the in-line distance, dₛ, between two or more adjacent quench rings. In some examples of the invention the location of the central axis of one or more of the quench rings can be changed in the X-Y plane by moving the support arm associated with the one or more quench rings in the X-Y plane by control element 34 as shown, for example, by repositioning of quench ring 12b in FIG. 5. Control element 34 and the support arms can be driven by suitable actuators that are responsive to the output of a computer process controller (processor) to rapidly perform the desired changes in positions of the one or more quench rings. Changes in position of the one or more quench rings may be accomplished dynamically while the workpiece is being quenched or prior to the beginning of the quench process.

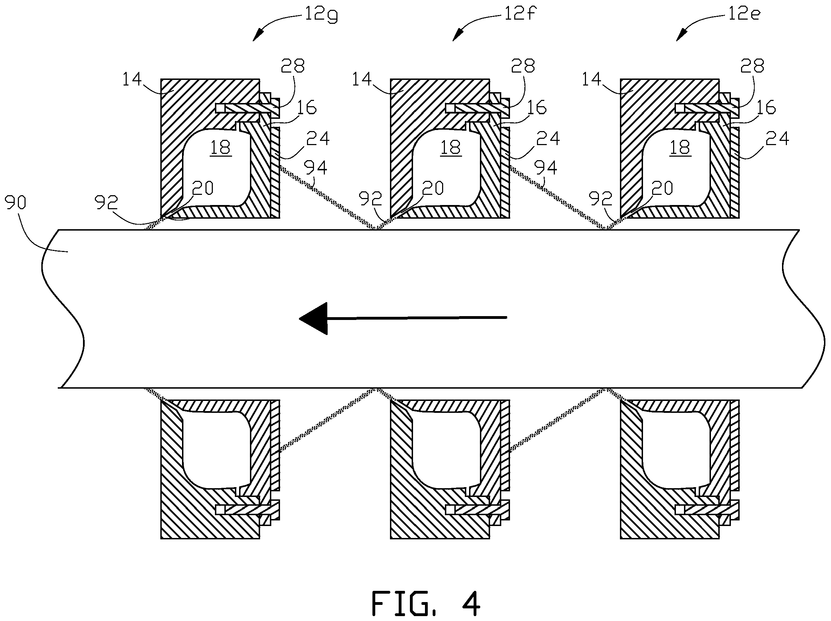

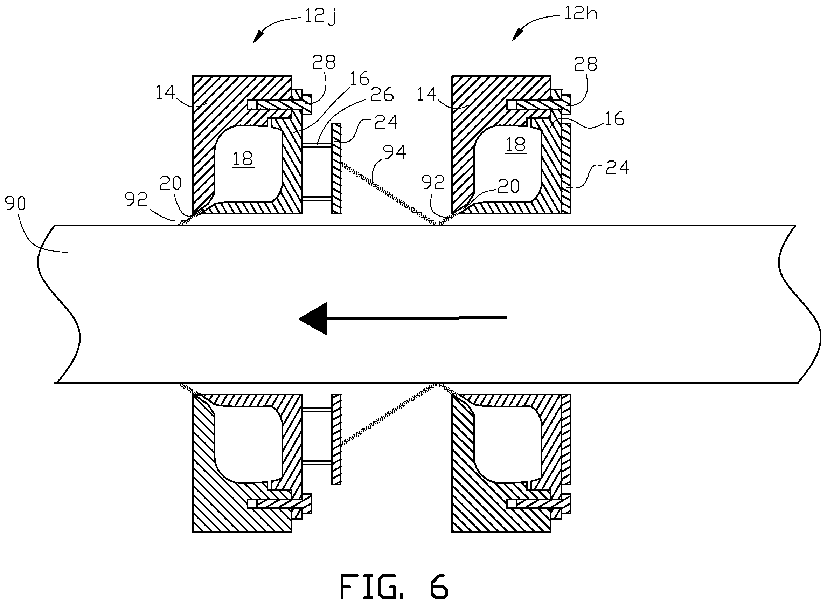

FIG. 3 illustrates another example of the spray quench system of the present invention. Quench rings 12e and 12f are similar in construction to the quench ring shown in FIG. 1, and also include spray guard 24, which is attached to the upstream side of the quench rings to deflect and dissipate reflected spray volume 94 (partially shown as a shaded segment in the figures). One non-limiting example of a spray guard is in the shape of an annular disk. Spray volume 94 represents a typical envelope for spray reflected off of the workpiece from incident spray in volume 92. Deflecting and dissipating the reflected spray volume before quenchant release from a downstream quench ring prevents interference of the reflected spray with the released quenchant from the downstream quench ring. For example in FIG. 4 reflected quenchant released from quench ring 12e is deflected by spray guard 24 associated with downstream quench ring 12f, and reflected quenchant from quench ring 12f is deflected by spray guard 24 associated with downstream quench ring 12g. Spray guard 24 may be permanently affixed to a side of its associated quench ring, or adjustably attached to its associated quench ring as shown in FIG. 6, wherein one or more offset fasteners 26 are used to offset spray guard 24 from associated quench ring 12j. This arrangement is of advantage in applications where the downstream quench ring is located farther downstream than suitable for mounting a spray guard directly on the side of the quench ring. The shape and positioning of each spray guard can change depending upon a particular arrangement of quench rings and the workpiece being heat-treated.

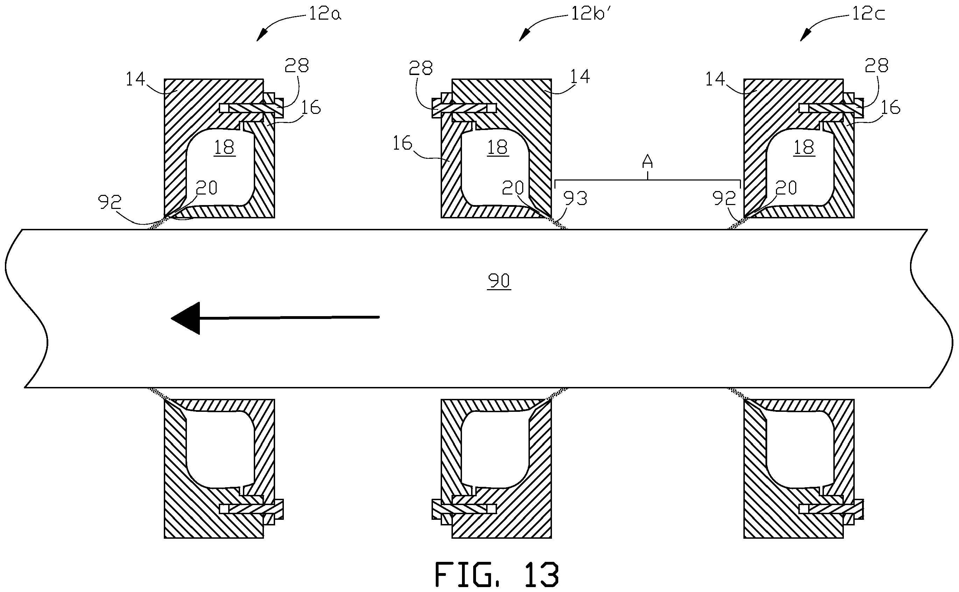

In another example of a spray quench system of the present invention as shown in FIG. 13, a plurality of quench rings 12a, 12b' and 12c in this example, can include at least one quench ring 12b' where the outlet passage 20 directs a quench flow volume 93 in the upstream direction (opposite to the direction of the workpiece as indicated by the arrow) to provide for focused cooling in a region (region "A" in FIG. 13) in the line of quench rings. The outlet passage 20 of the upstream facing quench ring 12b' and the outlet passages 20 of downstream facing quench rings 12a and 12c can individually transition within a range between a closed (zero flow rate) position to a fully opened (maximum flow rate) position either manually or via a preset program, for example by execution of a spray quench control software program further described below, to execute a quench process. One or more spray guards as described above can be used in region "A" in FIG. 13 to avoid spray interferences as described above.

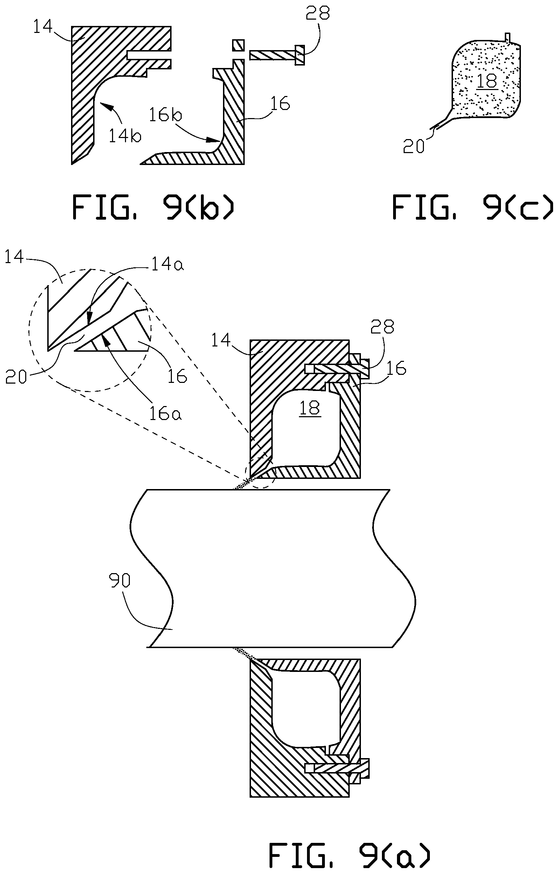

In the above examples of the invention outlet passage 20 of a quench ring used in the spray quench system of the present invention is formed between the facing edge 14a of first (outer) ring element 14 and the adjacent facing edge 16a of second (inner) ring element 16 as shown in further detail in FIG. 9(a) without protrusions of ring elements from the quench ring to achieve the outlet flow volume.

In the above examples of the invention the geometry of the quench ring plenum volume in a quench ring used in a spray quench system of the present invention is determined by the topological inner surfaces of the first (outer) ring element 14 and/or second (inner) ring element 16. In the above examples of the invention, as shown in further detail in FIG. 9(b) the topological inner surfaces of the inner and outer ring elements (inner surfaces 16b and 14b respectively) form an annulus plenum 18 (as shown in cross section in FIG. 9(c) that is generally cylindrical in volume with generally rounded corners to minimize turbulent flow of quenchant within the plenum and can have a central axis that is coincident with the axis Zᵣ. Thus, in this example, the portion of the inner ring element partially inserted into the outer ring element is generally tubular in shape. In other examples of the invention the geometry of the inner and outer ring elements may be formed to match specific (non-round) workpiece shapes for products including square, oval, rectangular or complex geometries requiring targeted cooling patterns. The plenum shape can be manipulated by the changes to the inner and outer ring geometries as necessary.

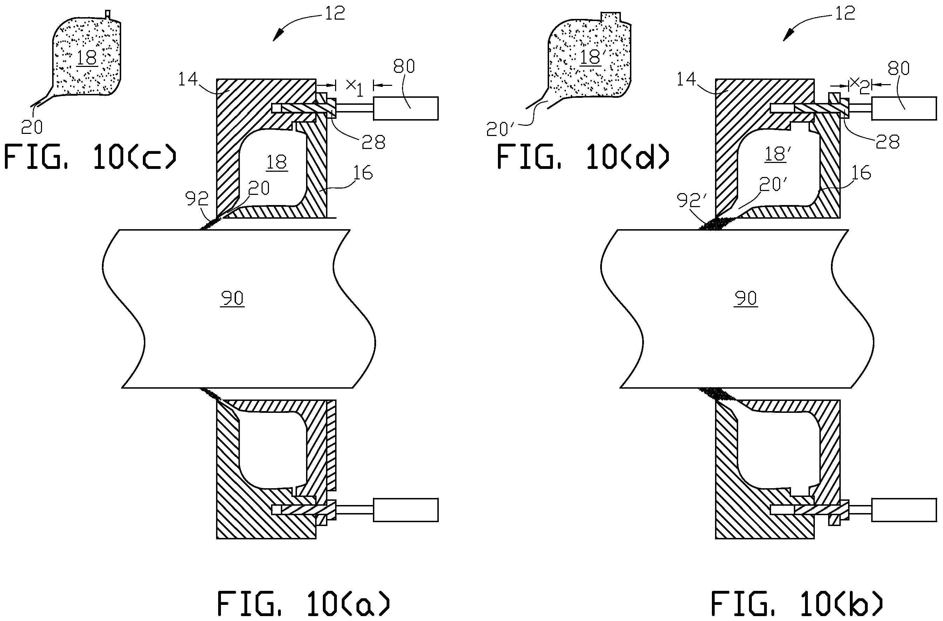

As mentioned above one or more fasteners 28 can be used to control the spacing between the first (inner) and second (outer) ring elements of a quench ring used in a spray quench system of the present invention so that the shape and volume of the outlet opening will correspondingly change as the spacing is changed. In one example of the present invention of a fastener control apparatus the fasteners may be connected to a suitable linear actuator 80 as shown diagrammatically in FIG. 10(a) and FIG. 10(b) so that the linear actuator linearly moves the fasteners and attached inner ring 16 in the direction of the central axis, Zᵣ, of the quench ring to increase (transition from FIG. 10(a) to FIG. 10(b)) or decrease (transition from FIG. 10(b) to FIG. 10(a)) the quenchant flow rate through the outlet passage. FIG. 10(c) and FIG. 10(d) respectively illustrate in cross section the change in outlet passage and ejected quenchant configurations for the arrangements shown in FIG. 10(a) and FIG. 10(b). In other examples of the invention the spacing between the inner and outer ring elements can be set manually, for example, by using feeler gages or spacers between inner ring element 14 and outer ring element 16 as the fasteners 28 are adjusted. In a spray quench system of the present invention having a plurality of quench rings, the spacing between the inner and outer ring elements can be adjusted individually for each quench ring. Linear movement between the inner and outer ring elements in direction of the central axis, Zᵣ, results in precision change in the outlet passage compared with rotational adjustments between quench ring elements.

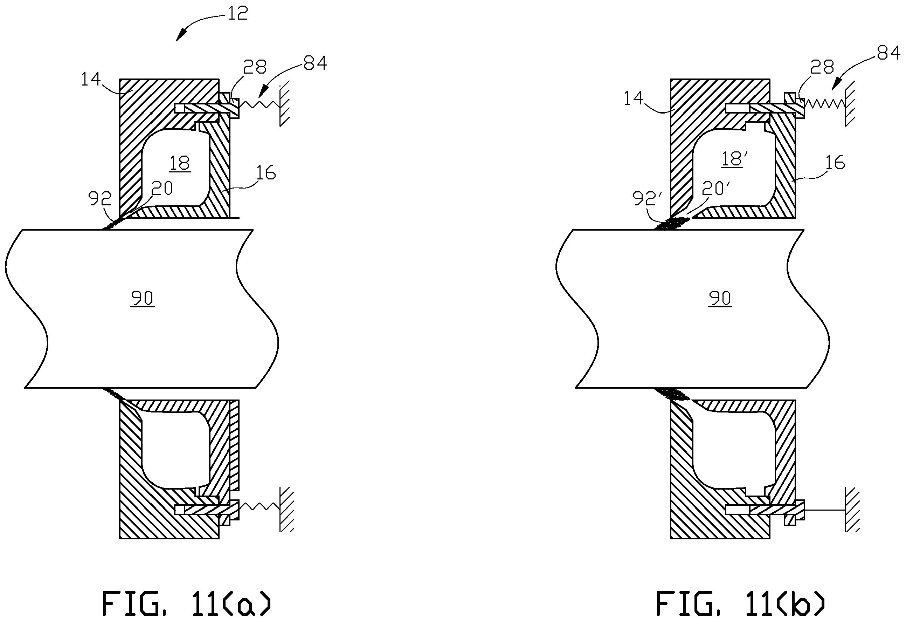

Alternatively in another example of the present invention of a fastener control apparatus the one or more fasteners may be maintained under a tension force, for example by spring 84 as shown in FIG. 11(a) so that the pressure of the quenchant supplied to inlet 22 expands the volume of the plenum and compresses spring 84 to increase the quenchant flow rate through outlet passage 20 as shown in FIG. 11(b). In other examples of the invention the fasteners may serve to change the volume of the plenum as well as the outlet passage.

In some examples of the invention, as shown in FIG. 12(a) a variable displacement pump 78, or other means for controlling a variable flow rate of quenchant to the inlet of one or more quench rings, such as a variable flow control valve, can be used in a spray quench system of the present invention with: (1) the one or more fasteners holding the outlet passage volume fixed; or (2) the one or more fasteners varying the outlet passage volume in combination with the means for controlling a variable flow rate of quenchant to inlet.

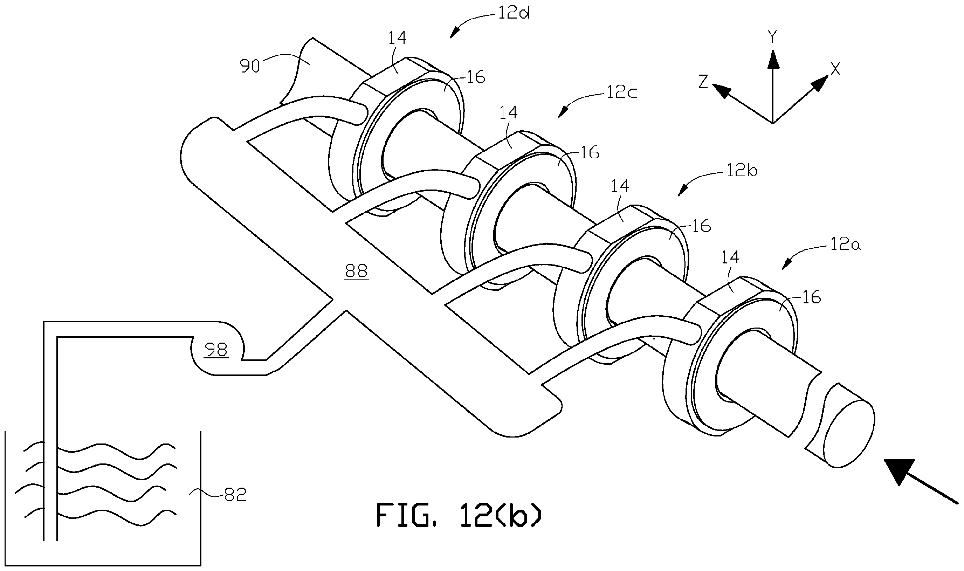

In some examples of the invention a quenchant constant displacement pump 98 can be used with a manifold 88 to deliver quenchant to multiple quench rings in a spray quench system of the present invention as shown in FIG. 12(b).

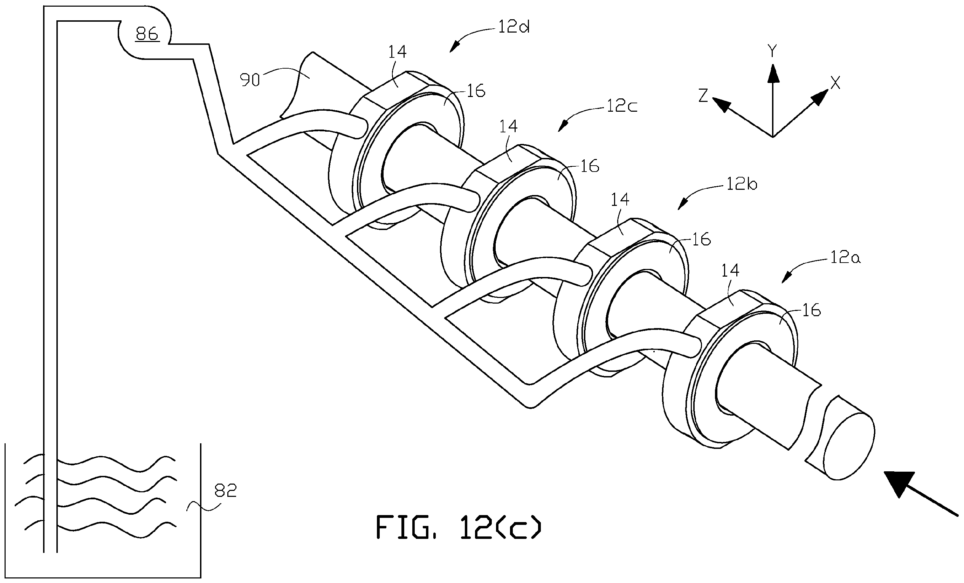

In other examples of the invention, as shown in FIG. 12(c) a suitable single high pressure pump 86, such as a turbine pump, or other means for supplying quenchant at a uniform flow rate and high pressure can be used to supply quenchant directly to multiple quench rings in a spray quench system of the present invention.

In another example of the invention, in combination with one or more of the above examples of the invention, quenchant flow from individual quench rings in a spray quench system of the present invention can be adjusted to optimize the distribution of the cooling flows from each quench ring to match the overall spray quench system quench rate to the mass cooling requirement of the workpiece. For example a spray quench control system of the present invention may utilize a computer processor with suitable input and output spray quench system control devices to execute a spray quench control software program that may be used to accomplish one or more in combination of at least the following spray quench system adjustments: (1) adjusting the in-line distance between two or more quench rings as further disclosed above; (2) adjusting the quench ring central axis of one or more quench rings as further described above; (3) adjusting the position of one or more spray guards as further described above; (4) adjusting the outlet passage shape and volume of one or more quench rings in the spray quench system (including complete closure of the outlet passage for one or more of the quench rings) as further described above; and/or (5) adjusting the quenchant flow rate and quenchant volume for one or more quench rings by means of a variable displacement pump, or other means for supplying a variable flow volume of quenchant to one or more of the quench rings. These quench system adjustments may be dynamically accomplished by a computer program executed by the computer processor based upon the mass cooling requirements of the workpiece passing through the quench rings that may be determined, for example, by trial and error quench sample processing. In some examples of the invention heat imaging of the workpiece passing through the spray quench system of the present invention, for example by infrared sensing and imaging, may be used to provide feedback data to the spray quench control system to indicate real time cooling results via infrared sensors A through D shown in FIG. 7 to adaptively perform one or more of the five spray quench system adjustments described above.

In another example of the invention, one or more quench rings of a particular inside diameter can be assembled in a module for a spray quench system of the present invention. The module can incorporate the support structure described above. Different modules having quench rings of different inside diameters, and/or other different quench system features, may be interchanged on a heat treatment line to accommodate workpieces of different dimensions and/or workpieces having different mass cooling requirements. Quick connections for quenchant and any electrical and/or mechanical interfaces may be provided with each module.

The particular shape of the first and second quench ring elements shown in the examples of the invention may be changed without deviating from the scope of the invention as long as the elements form a quenchant plenum chamber and adjustable outlet opening or openings. Further, more than two ring elements (first and second quench ring elements) may perform the same functions of the described invention without deviating from the scope of the invention. In some examples of the invention the one or more quench rings may be formed as a split ring assembly, with optional hinge elements, so that the one or more quench rings may be interchanged around a workpiece.

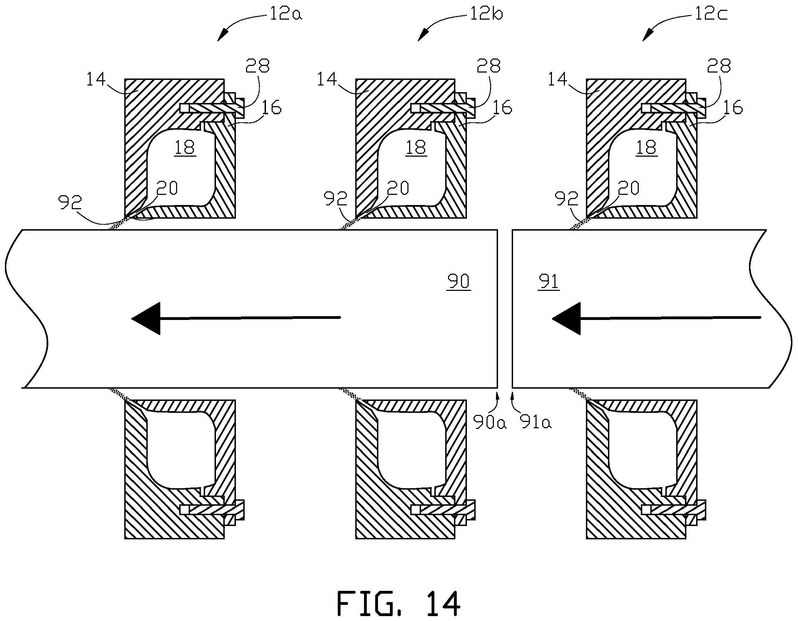

The spray quench systems of the present invention are a particular improvement over various prior art systems in that the established flow volume 92 from the quench rings as shown, for example, in FIG. 14 avoids or minimizes end-of-workpiece undesirable end-quench effects and entry of quenchant into the end interior regions of adjoining workpieces 90 and 91. While the end-to-end distance between sequential workpieces passing through a spray quench system is typically based on other process requirements, facing trailing end 90a of workpiece 90 and leading end 91a of workpiece 91 can include up to zero end-to-end distance (that is pipe trailing end 90a and leading end 91a in contact with each other) without end-quench effects and no entry of quenchant into the interior of the workpieces.

While a certain number of quench rings are shown in the various examples of the invention, the number of quench rings may be changed without deviating from the scope of the invention. Further, one or more quench rings may be interspaced with other components in a particular application, such as mechanical supports or transport components for the workpiece, and heating components, such as induction heating devices. In arrangements with two or more quench rings, the outlet volume of each quench ring may be independently adjusted to form a unique spray volume as required for a particular application.

## Claims

1. A spray quench system for quenching a workpiece (90), the spray quench system comprising:
a quenchant supply system for a supply of a quenchant to one or more quench rings (12), each of the one or more quench rings (12) comprising:
an outer ring element (14) having at least one exterior opening (22) for connection to the supply of the quenchant to an interior region (14b) of the outer ring element (14);
an inner ring element (16) at least partially inserted into the outer ring element (14);
a quench ring plenum (18) formed from the interior region of the outer ring element (14) in combination with an interior region (16b) of the inner ring element (16) for receiving the supply of the quenchant from the at least one exterior opening (22);
an outlet passage (20) from the quench ring plenum (18) formed between an adjacent facing edges of the outer ring element (14) and the inner ring element (16) for receiving the quenchant from the quench ring plenum (18) and ejecting the quenchant received from the quench ring plenum (18) in a conical volume (92) to make contact with a surface region of the workpiece (90); and
one or more fasteners (28) joining the inner ring element (16) and the outer ring element (14);
**characterized by:**
a fastener control apparatus (80) to dynamically adjust the one or more fasteners (28) for at least one of the one or more quench rings (12) to change the conical volume (92) of the outlet passage of the at least one of the one or more or more quench rings (12);
a means for variably controlling a flow rate of the quenchant from a quenchant reservoir (82) to each of the one or more quench rings to dynamically adjust a mass flow rate of the quenchant through the quench ring plenum (18) and the outlet passage (20) and a quenchant velocity of the quenchant ejected from the outlet passage; and
the supply of the quenchant from the quenchant reservoir (82) to the at least one exterior opening (22) of the one or more quench rings (12) being selected from:
a variable displacement pump (78) or other means for variably controlling the flow rate of the quenchant to the at least one exterior opening (22) of the one or more quench rings (12) with the one or more fasteners (28) alternatively:
holding a volume of the outlet passage (20) fixed; or
varying the outlet passage (20) in combination with the variable displacement pump (78) or other means for variably controlling the flow rate of the quenchant to the at least one exterior opening (22) of the one or more quench rings (12);
a quenchant constant displacement pump (98) delivering by way of a manifold the quenchant to a plurality of quench rings (12); and
a single high pressure pump (86) or other means for supplying quenchant to a plurality of quench rings at a uniform flow rate and a high pressure.

2. A method of quenching a workpiece (90) with a spray quench system, the method comprising:
passing the workpiece (90) through a quench ring assembly comprising one or more quench rings (12), each of the one or more quench rings (12) having an outer ring element (14) at least partially inserted into an inner ring element (16), and the outer ring element (14) and the inner ring element (16) joined together by one or more fasteners (28), the outer ring element (14) having at least one exterior opening (22) to an interior region of the outer ring element (14);
the at least one exterior opening (22) in communication with a quench ring plenum (18) formed from the interior region (14b) of the outer ring element (14) in combination with an-interior region (16b) of the inner ring element (16) for receiving a quenchant from the at least one exterior opening (22), the quench ring plenum (18) in communication with an outlet passage (20) from the quench ring plenum (18) formed between an adjacent facing edges of the outer ring element (14) and the inner ring element (16) for receiving the quenchant from the quench ring plenum (18); and
ejecting the quenchant from the output passage (20) of each of the one or more quench rings in a conical volume (92) to make contact with a surface of the workpiece (90);
**characterised by:**
dynamically controlling the one or more fasteners (28) for at least one of the one or more quench rings (12) to change the conical volume (92) of the outlet passage (20) of the at least one of the one or more quench rings (12) while the workpiece (90) passes through the quench ring assembly;
dynamically adjusting a mass flow rate of the quenchant through the quench ring plenum (18) and the outlet passage (20) and a quenchant velocity of the quenchant ejected from the outlet passage with a means for variably controlling a flow rate of the quenchant from a quenchant reservoir (82) to each of the one or more quench rings to; and
supplying the quenchant from:
a variable displacement pump (78) or other means for controlling a variable flow rate of the quenchant to the at least one exterior opening (22) of one or more quench rings with the one or more fasteners alternatively:
holding an outlet passage volume fixed; or
varying the outlet passage in combination with the variable a variable displacement pump (78) or other means for controlling a variable flow rate of the quenchant to the at least one exterior opening (22) of one or more quench rings;
a quenchant constant displacement pump (98) delivering by way of a manifold the quenchant to a plurality of quench rings (12); or
a single high pressure pump (86) or other means for supplying quenchant to a plurality of quench rings at a uniform flow rate and a high pressure.

3. The method of Claim 2 wherein the one or more quench rings comprises at least two quench rings and ejecting the quenchant from the outlet passage (20) of each of the at least two quench rings further comprises ejecting the quenchant from at least one of the at least two quench rings in an upstream direction opposite the direction of the workpiece (90) passing through the quench ring assembly and ejecting the quenchant from the remainder of the at least two quench rings in a downstream direction corresponding to the direction of the workpiece (90) passing through the quench ring assembly.

4. The method of Claim 2 or 3 further comprising sequentially passing a second workpiece through the quench ring assembly with a leading end of the second workpiece adjacent to a trailing end of the workpiece (90).

5. The method of any one of Claims 2-4 wherein the one or more quench rings comprises at least two quench rings, the method further comprising the step of dynamically adjusting an in-line distance between at least two adjacent quench rings of the at least two quench rings responsive to a mass cooling requirement of the workpiece (90) passing through the quench ring assembly.

6. The method of any one of Claims 2-5 further comprising the step of dynamically adjusting the location of a quench ring central axis of at least one quench ring of the one or more quench rings responsive to the location of a workpiece (90) central axis of the workpiece (90) passing through the one or more quench rings.

7. The method of any one of Claims 2-6 wherein the one or more quench rings comprises at least two quench rings, further comprising the step of dynamically adjusting the location of a spray guard (24) positioned external to either the inner ring element (16) or the outer ring element (14) of at least one of the two quench rings to deflect a reflected spray from the workpiece (90) resulting from the quenchant ejected from the outlet passage (20) of one of the at least two quench rings adjacent to the spray guard (24) responsive to a mass cooling requirement of the workpiece (90) passing through the quench ring assembly.

8. The method of any one of Claims 2-7, wherein the one or more quench rings comprises at least two quench rings, the method further comprising a computer processor executing a spray quench control software program to coordinate the quenchant ejected from each of the at least two quench rings with a mass cooling requirement of the workpiece (90) as the workpiece (90) passes through the spray quench system by selectively or in combination:
(1) adjusting an in-line distance between at least two of the at least two quench rings (12);
(2) adjusting the location of a quench ring central axis of at least one of the at least two quench rings (14);
(3) adjusting the position of at least one spray guard (24) associated with at least one of the at least two quench rings (12);
(4) adjusting the conical volume (92) of the outlet passage (20) of at least one of the at least two quench rings (12); and/or
(5) adjusting a mass flow rate of the quenchant and a quenchant velocity for at least one of the at least two quench rings.

9. The method of Claim 8 further comprising the step of sensing a temperature of the workpiece (90) as the workpiece (90) passes through the quench ring assembly to coordinate the quenchant ejected from each of the at least two quench rings (12) with a mass cooling requirement of the workpiece (90) as the workpiece (90) passes through the quench ring assembly.

## Patentansprüche

1. Sprühabschrecksystem zum Abschrecken eines Werkstücks (90), wobei das Sprühabschrecksystem Folgendes aufweist:
ein Abschreckmediumszufuhrsystem für eine Zufuhr eines Abschreckmediums zu ein oder mehr Abschreckringen (12), wobei jeder der ein oder mehr Abschreckringe (12) Folgendes aufweist:
ein Außenringelement (14) mit wenigstens einer äußeren Öffnung (22) zur Verbindung mit der Zufuhr des Abschreckmediums zu einem Innenbereich (14b) des Außenringelements (14);
ein Innenringelement (16), das zumindest teilweise in das Außenringelement (14) eingesetzt ist;
eine Abschreckringkammer (18), die aus dem Innenbereich des Außenringelements (14) in Kombination mit einem Innenbereich (16b) des Innenringelements (16) gebildet wird, zum Erhalten der Zufuhr des Abschreckmediums von der wenigstens einen äußeren Öffnung (22) her;
einen Auslasskanal (20) aus der Abschreckringkammer (18), der zwischeneinander gegenüberliegenden Rändern des Außenringelements (14) und des Innenringelements (16) gebildet wird, zum Erhalten des Abschreckmediums aus der Abschreckringkammer (18) und zum Ausstoßen des aus der Abschreckringkammer (18) erhaltenen Abschreckmediums in einem Kegelvolumen (92), um mit einem Oberflächenbereich des Werkstücks (90) in Kontakt zu kommen; und
ein oder mehr Befestigungselemente (28), die das Innenringelement (16) und das Außenringelement (14) zusammenfügen;
**gekennzeichnet durch**:
eine Befestigungssteuervorrichtung (80) zum dynamischen Einstellen der ein oder mehr Befestigungselemente (28) für wenigstens einen von den ein oder mehr Abschreckringen (12), um das Kegelvolumen (92) des Auslasskanals des wenigstens einen der ein oder mehr Abschreckringe (12) zu ändern;
ein Mittel zum verstellbaren Regeln eines Durchsatzes des Abschreckmediums von einem Abschreckmediumspeicher (82) zu jedem von den ein oder mehr Abschreckringen zum dynamischen Einstellen eines Massendurchsatzes des Abschreckmediums durch die Abschreckringkammer (18) und den Auslasskanal (20) und einer Abschreckmediumsgeschwindigkeit des aus dem Auslasskanal ausgestoßenen Abschreckmediums; und
**dadurch, dass** die Zufuhr des Abschreckmediums aus dem Abschreckmediumspeicher (82) zu der wenigstens einen äußeren Öffnung (22) der ein oder mehr Abschreckringe (12) ausgewählt wird aus:
einer Verstellpumpe (78) oder einem anderen Mittel zum verstellbaren Regeln des Durchsatzes des Abschreckmediums zu der wenigstens einen äußeren Öffnung (22) der ein oder mehr Abschreckringe (12), wobei die ein oder mehr Befestigungselemente (28) alternativ:
ein Volumen des Auslasskanals (20) fest halten; oder
den Auslasskanal (20) in Kombination mit der Verstellpumpe (78) oder dem anderen Mittel zum verstellbaren Regeln des Durchsatzes des Abschreckmediums zu der wenigstens einen äußeren Öffnung (22) der ein oder mehr Abschreckringe (12) verstellen;
einer Abschreckmedium-Konstantpumpe (98), die das Abschreckmedium mittels eines Verteilers zu mehreren Abschreckringen (12) fördert; und
einer einzelnen Hochdruckpumpe (86) oder einem anderen Mittel zum Zuführen von Abschreckmedium mit einem gleichmäßigen Durchsatz und einem hohen Druck zu mehreren Abschreckringen.

2. Verfahren zum Abschrecken eines Werkstücks (90) mit einem Sprühabschrecksystem, wobei das Verfahren Folgendes aufweist:
Hindurchführen des Werkstücks (90) durch eine Abschreckringanordnung, die ein oder mehr Abschreckringe (12) aufweist, wobei jeder der ein oder mehr Abschreckringe (12) ein Außenringelement (14) hat, das wenigstens teilweise in ein Innenringelement (16) eingesetzt ist, und das Außenringelement (14) und das Innenringelement (16) durch ein oder mehr Befestigungselemente (28) zusammengefügt sind, wobei das Außenringelement (14) wenigstens eine äußere Öffnung (22) zu einem Innenbereich des Außenringelements (14) hat;
wobei die wenigstens eine äußere Öffnung (22) in Verbindung mit einer Abschreckringkammer (18) ist, die aus dem Innenbereich (14b) des Außenringelements (14) in Kombination mit einem Innenbereich (16b) des Innenringelements (16) zum Erhalten eines Abschreckmediums von der wenigstens einen äußeren Öffnung (22) her gebildet wird, wobei die Abschreckringkammer (18) in Verbindung mit einem Auslasskanal (20) aus der Abschreckringkammer (18) ist, der zwischen einander gegenüberliegenden Rändern des Außenringelements (14) und des Innenringelements (16) zum Erhalten des Abschreckmediums aus der Abschreckringkammer (18) gebildet wird; und
Ausstoßen des Abschreckmediums aus dem Auslasskanal (20) von jedem der ein oder mehr Abschreckringe in einem Kegelvolumen (92), um mit einer Oberfläche des Werkstücks (90) in Kontakt zu kommen;
**gekennzeichnet durch**:
dynamisches Steuern der ein oder mehr Befestigungselemente (28) für wenigstens einen von den ein oder mehr Abschreckringen (12), um das Kegelvolumen (92) des Auslasskanals (20) des wenigstens einen der ein oder mehr Abschreckringe (12) zu ändern, während das Werkstück (90) durch die Abschreckringanordnung hindurchgeführt wird;
dynamisches Einstellen eines Massendurchsatzes des Abschreckmediums durch die Abschreckringkammer (18) und den Auslasskanal (20) und einer Abschreckmediumsgeschwindigkeit des aus dem Auslasskanal ausgestoßenen Abschreckmediums mit einem Mittel zum verstellbaren Regeln eines Durchsatzes des Abschreckmediums von einem Abschreckmediumspeicher (82) zu jedem von den ein oder mehr Abschreckringen; und
Zuführen des Abschreckmediums von:
einer Verstellpumpe (78) oder einem anderen Mittel zum Regeln eines verstellbaren Durchsatzes des Abschreckmediums zu der wenigstens einen äußeren Öffnung (22) der ein oder mehr Abschreckringe, wobei die ein oder mehr Befestigungselemente alternativ::
ein Volumen des Auslasskanals fest halten; oder
den Auslasskanal in Kombination mit der Verstellpumpe (78) oder dem anderen Mittel zum Regeln eines verstellbaren Durchsatzes des Abschreckmediums zu der wenigstens einen äußeren Öffnung (22) von ein oder mehr Abschreckringen verstellen;
einer Abschreckmedium-Konstantverstellpumpe (98), die das Abschreckmedium mittels eines Verteilers zu mehreren Abschreckringen (12) fördert; oder
einer einzelnen Hochdruckpumpe (86) oder einem anderen Mittel zum Zuführen von Abschreckmedium mit einem gleichmäßigen Durchsatz und einem hohen Druck zu mehreren Abschreckringen.

3. Verfahren nach Anspruch 2, wobei die ein oder mehr Abschreckringe wenigstens zwei Abschreckringe aufweisen und das Ausstoßen des Abschreckmediums aus dem Auslasskanal (20) von jedem der wenigstens zwei Abschreckringe ferner das Ausstoßen des Abschreckmediums aus wenigstens einem von den wenigstens zwei Abschreckringen in einer Zulaufrichtung, die der Richtung des durch die Abschreckringanordnung hindurchgeführten Werkstücks (90) entgegengesetzt ist, und das Ausstoßen des Abschreckmediums aus dem übrigen von den wenigstens zwei Abschreckringen in einer Ablaufrichtung, die der Richtung des durch die Abschreckringanordnung hindurchgeführten Werkstücks (90) entspricht, aufweist.

4. Verfahren nach Anspruch 2 oder 3, das ferner das sequentielle Hindurchführen eines zweiten Werkstücks durch die Abschreckringanordnung aufweist, wobei ein vorderes Ende des zweiten Werkstücks neben einem hinteren Ende des Werkstücks (90) liegt.

5. Verfahren nach einem der Ansprüche 2 bis 4, wobei die ein oder mehr Abschreckringe wenigstens zwei Abschreckringe aufweisen, wobei das Verfahren ferner den Schritt des dynamischen Einstellens eines linearen Abstands zwischen wenigstens zwei nebeneinanderliegenden Abschreckringen der wenigstens zwei Abschreckringe als Reaktion auf eine Massenkühlanforderung des durch die Abschreckringanordnung hindurchgeführten Werkstücks (90) aufweist.

6. Verfahren nach einem der Ansprüche 2 bis 5, das ferner den Schritt des dynamischen Einstellens der Lage einer Abschreckringmittelachse von wenigstens einem Abschreckring der ein oder mehr Abschreckringe als Reaktion auf die Lage einer Werkstück- (90) -mittelachse des durch die ein oder mehr Abschreckringe hindurchgeführten Werkstücks (90) aufweist.

7. Verfahren nach einem der Ansprüche 2 bis 6, wobei die ein oder mehr Abschreckringe wenigstens zwei Abschreckringe aufweisen und welches ferner den Schritt des dynamischen Einstellens der Lage eines Spritzschutzes (24) aufweist, der äußerlich von entweder dem Innenringelement (16) oder dem Außenringelement (14) von wenigstens einem der zwei Abschreckringe positioniert ist, um einen reflektierten Sprühstrahl, der durch das Abschreckmedium entsteht, das aus dem Auslasskanal (20) von einem der wenigstens zwei Abschreckringe neben dem Spritzschutz (24) als Reaktion auf eine Massenkühlanforderung des durch die Abschreckringanordnung hindurchgeführten Werkstücks (90) ausgestoßen wird, vom Werkstück (90) abzulenken.

8. Verfahren nach einem der Ansprüche 2 bis 7, wobei die ein oder mehr Abschreckringe wenigstens zwei Abschreckringe aufweisen, wobei das Verfahren ferner einen Computerprozessor aufweist, der ein Sprühabschrecksteuerungs-Softwareprogramm zum Koordinieren des aus jedem der wenigstens zwei Abschreckringe ausgestoßenen Abschreckmediums mit einer Massenkühlanforderung des Werkstücks (90) beim Hindurchführen des Werkstücks (90) durch das Sprühabschrecksystem ausführt, indem es selektiv oder in Kombination:
(1) einen linearen Abstand zwischen wenigstens zwei der wenigstens zwei Abschreckringe (12) einstellt;
(2) die Lage einer Abschreckringmittelachse von wenigstens einem der wenigstens zwei Abschreckringe (14) einstellt;
(3) die Position von wenigstens einem Spritzschutz (24) einstellt, der wenigstens einem der wenigstens zwei Abschreckringe (12) zugeordnet ist;
(4) das Kegelvolumen (92) des Auslasskanals (20) von wenigstens einem der wenigstens zwei Abschreckringe (12) einstellt; und/oder
(5) einen Massendurchsatz des Abschreckmediums und eine Abschreckmediumsgeschwindigkeit für wenigstens einen der wenigstens zwei Abschreckringe einstellt.

9. Verfahren nach Anspruch 8, das ferner den Schritt des Erfassens einer Temperatur des Werkstücks (90) beim Hindurchführen des Werkstücks (90) durch die Abschreckringanordnung zum Koordinieren des aus jedem der wenigstens zwei Abschreckringe (12) ausgestoßenen Abschreckmediums mit einer Massenkühlanforderung des Werkstücks (90) beim Hindurchführen des Werkstücks (90) durch die Abschreckringanordnung aufweist.

## Revendications

1. Système de trempe par pulvérisation pour la trempe d'une pièce de travail (90), le système de trempe par pulvérisation comprenant :
un système d'alimentation en agent de trempe pour une alimentation d'un ou de plusieurs anneaux de trempe (12) en agent de trempe, chacun des un ou plusieurs anneaux de trempe (12) comprenant :
un élément annulaire externe (14) ayant au moins une ouverture extérieure (22) pour le raccordement à l'alimentation d'une zone intérieure (14b) de l'élément annulaire externe (14) en agent de trempe ;
un élément annulaire interne (16) au moins partiellement inséré dans l'élément annulaire externe (14) ;
un plénum annulaire de trempe (18) formé à partir de la région intérieure de l'élément annulaire externe (14) en combinaison avec une région intérieure (16b) de l'élément annulaire interne (16) pour recevoir l'alimentation en agent de trempe à partir de l'au moins une ouverture extérieure (22) ;
un passage de sortie (20) à partir du plénum annulaire de trempe (18) formé entre des bords adjacents en regard de l'élément annulaire externe (14) et de l'élément annulaire interne (16) pour recevoir l'agent de trempe du plénum annulaire de trempe (18) et éjecter l'agent de trempe reçu du plénum annulaire de trempe (18) dans un volume conique (92) afin d'entrer en contact avec une région de surface de la pièce de travail (90) ; et
un ou plusieurs dispositifs de fixation (28) reliant l'élément annulaire interne (16) et l'élément annulaire externe (14) ;
**caractérisé par :**
un appareil de commande de dispositif de fixation (80) afin de régler de manière dynamique les un ou plusieurs dispositifs de fixation (28) pour au moins un anneau de trempe des un ou plusieurs anneaux de trempe (12) afin de modifier le volume conique (92) du passage de sortie de l'au moins un anneau de trempe des un ou plusieurs anneaux de trempe (12) ;
un moyen pour commander de manière variable un débit de l'agent de trempe provenant d'un réservoir d'agent de trempe (82) vers chacun des un ou plusieurs anneaux de trempe afin de régler de manière dynamique un débit massique de l'agent de trempe à travers le plénum annulaire de trempe (18) et le passage de sortie (20) et une vitesse d'agent de trempe de l'agent de trempe éjecté à partir du passage de sortie ; et
l'alimentation de l'au moins une ouverture extérieure (22) des un ou plusieurs anneaux de trempe (12) en agent de trempe provenant du réservoir d'agent de trempe (82) étant choisie parmi :
une pompe à débit variable (78) ou un autre moyen pour commande de manière variable le débit de l'agent de trempe vers l'au moins une ouverture extérieure (22) des un ou plusieurs anneaux de trempe (12), les un ou plusieurs dispositifs de fixation (28), comme alternative :
maintenant fixe un volume du passage de sortie (20) ; ou
faisant varier le passage de sortie (20) en combinaison avec la pompe à débit variable (78) ou un autre moyen pour commande de manière variable le débit de l'agent de trempe vers l'au moins une ouverture extérieure (22) des un ou plusieurs anneaux de trempe (12) ;
une pompe à débit constant d'agent de trempe (98) distribuant par l'intermédiaire d'un collecteur l'agent de trempe à une pluralité d'anneaux de trempe (12) ; et
une seule pompe à haute pression (86) ou un autre moyen pour alimenter une pluralité d'anneaux de trempe en agent de trempe à un débit uniforme et à une pression élevée.

2. Procédé de trempe d'une pièce de travail (90) avec un système de trempe par pulvérisation, le procédé comprenant :
le passage de la pièce de travail (90) à travers un ensemble d'anneau de trempe comprenant un ou plusieurs anneaux de trempe (12), chacun des un ou plusieurs anneaux de trempe (12) ayant un élément annulaire externe (14) au moins partiellement inséré dans un élément annulaire interne (16), et l'élément annulaire externe (14) et l'élément annulaire interne (16) étant reliés entre eux par un ou plusieurs dispositifs de fixation (28), l'élément annulaire externe (14) ayant au moins une ouverture extérieure (22) vers une région intérieure de l'élément annulaire externe (14) ;
l'au moins une ouverture extérieure (22) en communication avec un plénum annulaire de trempe (18) formé à partir de la région intérieure (14b) de l'élément annulaire externe (14) en combinaison avec une région intérieure (16b) de l'élément annulaire interne (16) pour recevoir un agent de trempe provenant de l'au moins une ouverture extérieure (22), le plénum de l'anneau de trempe (18) en communication avec un passage de sortie (20) du plénum annulaire de trempe (18) formé entre des bords adjacents en regard de l'élément annulaire externe (14) et de l'élément annulaire interne (16) pour recevoir l'agent de trempe du plénum annulaire de trempe (18) ; et
l'éjection de l'agent de trempe du passage de sortie (20) de chacun des un ou plusieurs anneaux de trempe dans un volume conique (92) afin d'entrer en contact avec une surface de la pièce de travail (90) ;
**caractérisé par :**
la commande dynamique des un ou plusieurs dispositifs de fixation (28) pour au moins un anneau de trempe des un ou plusieurs anneaux de trempe (12) afin de modifier le volume conique (92) du passage de sortie (20) de l'au moins un anneau de trempe des un ou plusieurs anneaux de trempe (12) pendant que la pièce (90) traverse l'ensemble d'anneau de trempe ;
le réglage dynamique d'un débit massique de l'agent de trempe à travers le plénum annulaire de trempe (18) et le passage de sortie (20) et d'une vitesse d'agent de trempe de l'agent de trempe éjecté du passage de sortie avec un moyen pour commander de manière variable un débit de l'agent de trempe provenant d'un réservoir d'agent de trempe (82) vers chacun des un ou plusieurs anneaux de trempe ; et
l'alimentation en agent de trempe à partir de :
une pompe à débit variable (78) ou un autre moyen pour commander un débit variable de l'agent de trempe vers l'au moins une ouverture extérieure (22) d'un ou de plusieurs anneaux de trempe avec un plusieurs ou dispositifs de fixations, comme alternative :
en maintenant un volume de passage de sortie fixe ; ou
en faisant varier le passage de sortie en combinaison la pompe à débit variable (78) ou un autre moyen pour commander un débit variable de l'agent de trempe vers la au moins une ouverture extérieure (22) d'un ou de plusieurs anneaux de trempe ;
une pompe à débit constant d'agent de trempe (98) distribuant par l'intermédiaire d'un collecteur l'agent de trempe à une pluralité d'anneaux de trempe (12) ; ou
une seule pompe à haute pression (86) ou un autre moyen pour alimenter une pluralité d'anneaux de trempe en agent de trempe à un débit uniforme et à une pression élevée.

3. Procédé selon la revendication 2 dans lequel les un ou plusieurs anneaux de trempe comprennent au moins deux anneaux de trempe et l'éjection de l'agent de trempe du passage de sortie (20) de chacun des au moins deux anneaux de trempe comprend en outre l'éjection de l'agent de trempe d'au moins un anneau de trempe des au moins deux anneaux de trempe dans une direction amont opposée à la direction de la pièce de travail (90) passant à travers l'ensemble d'anneau de trempe et l'éjection de l'agent de trempe du reste des au moins deux anneaux de trempe dans une direction aval correspondant à la direction de la pièce de travail (90) passant à travers l'ensemble d'anneau de trempe.

4. Procédé selon la revendication 2 ou 3 comprenant en outre le passage séquentiel d'une deuxième pièce de travail à travers l'ensemble d'anneau de trempe, une extrémité avant de la deuxième pièce de travail étant adjacente à une extrémité arrière de la pièce de travail (90).

5. Procédé selon l'une quelconque des revendications 2 à 4 dans lequel les un ou plusieurs anneaux de trempe comprennent au moins deux anneaux de trempe, le procédé comprenant en outre l'étape de réglage dynamique d'une distance en ligne entre au moins deux anneaux de trempe adjacents des au moins deux anneaux de trempe en réponse à une exigence de refroidissement de masse de la pièce de travail (90) passant à travers l'ensemble d'anneau de trempe.

6. Procédé selon l'une quelconque des revendications 2 à 5 comprenant en outre l'étape de réglage dynamique de l'emplacement de l'axe central d'un anneau de trempe d'au moins un anneau de trempe des un ou plusieurs anneaux de trempe en réponse à l'emplacement de l'axe central de pièce de travail (90) d'une pièce de travail (90) passant à travers les un ou plusieurs anneaux de trempe.

7. Procédé selon l'une quelconque des revendications 2 à 6 dans lequel les un ou plusieurs anneaux de trempe comprennent au moins deux anneaux de trempe, comprenant en outre l'étape de réglage dynamique de l'emplacement d'une protection antiprojection (24) positionnée à l'extérieur soit de l'élément annulaire interne (16) soit de l'élément annulaire externe (14) d'au moins un anneau de trempe des deux anneaux de trempe afin de dévier une pulvérisation réfléchie de la pièce de travail (90) résultant de l'agent de trempe éjecté du passage de sortie (20) d'un anneau de trempe des au moins deux anneaux de trempe adjacents à la protection antiprojection (24) en réponse à une exigence de refroidissement de masse de la pièce de travail (90) passant à travers l'ensemble d'anneau de trempe.

8. Procédé selon l'une quelconque des revendications 2 à 7, dans lequel les un ou plusieurs anneaux de trempe comprennent au moins deux anneaux de trempe, le procédé comprenant en outre un processeur informatique exécutant un programme logiciel de commande de trempe par pulvérisation afin de coordonner l'agent de trempe éjecté de chacun des au moins deux anneaux de trempe avec un besoin de refroidissement de masse de la pièce de travail (90) à mesure que la pièce de travail (90) passe à travers le système de trempe par pulvérisation, en réalisant de manière sélective ou combinée :
(1) le réglage d'une distance en ligne entre au moins deux anneaux de trempe des au moins deux anneaux de trempe (12) ;
(2) le réglage de l'emplacement de l'axe central d'un anneau de trempe d'au moins un anneau de trempe des au moins deux anneaux de trempe (14) ;
(3) le réglage de la position d'au moins une protection antiprojection (24) associée à au moins un anneau de trempe des au moins deux anneaux de trempe (12) ;
(4) le réglage du volume conique (92) du passage de sortie (20) d'au moins un anneau de trempe des au moins deux anneaux de trempe (12) ; et/ou
(5) le réglage d'un débit massique de l'agent de trempe et d'une vitesse d'agent de trempe pour au moins un anneau de trempe des au moins deux anneaux de trempe.

9. Procédé selon la revendication 8 comprenant en outre l'étape de détection d'une température de la pièce de travail (90) à mesure que la pièce de travail (90) passe à travers l'ensemble d'anneau de trempe afin de coordonner l'agent de trempe éjecté de chacun des au moins deux anneaux de trempe (12) avec une exigence de refroidissement de masse de la pièce de travail (90) à mesure que la pièce de travail (90) passe à travers l'ensemble d'anneau de trempe.
